# EUROPEAN PATENT APPLICATION

(11) **EP 1 518 735 A1**
(43) Date of publication of application: **30.03.2005**
(21) Application number: 04255846.0
(22) Date of filing: 24.09.2004
(51) Int. Cl.: B60K 1/02, B60K 17/04

(54) **Vehicle drive device with two drive sources**

(30) Priority: 29.09.2003 JP 2003337882
(71) Applicant: NISSAN MOTOR COMPANY, LIMITED, Yokohama-shi, Kanagawa 221-0023 (JP)
(72) Inventor: Shimizu, Kouichi, Sagamihara-shi Kanagawa 228-0802 (JP)
(74) Representative: Godwin, Edgar James

(57) **Abstract**

A vehicle drive device has a reduction gear (G) is installed between first and second electric motors (M1 and M2) and a wheel axle (2) so that the first and second electric motors (M1 and M2) can transmit torque to the wheel axle (2) at different reduction ratios. More specifically, the reduction gear (G) is configured such that the torque of the first electric motor (M1) is delivered to the wheel axle (2) using a reduction ratio suitable for low speed travel and the torque of the second electric motor (M1) is delivered using a reduction ratio suitable for high speed travel. Thus, the vehicle drive device can deliver sufficient drive torque at rotational speeds ranging from low speeds to high speeds while preventing the size of the rotary drive source used to drive the vehicle from becoming large.

## Description

The present invention relates to a vehicle drive device configured to drive a wheel or wheels of a vehicle using an electric motor or other rotary drive sources.

One example of a conventional vehicle drive device in which wheels are driven by a rotary device is presented in Japanese Laid-Open Utility Model Publication No. 55-138129. This reference describes a four-wheel drive vehicle in which one of pairs of front and rear wheels is driven with an engine and the other pair of the rear and the front wheels (that are not driven by the engine) is driven by an electric motor.

In view of the above, it will be apparent to those skilled in the art from this disclosure that there exists a need for an improved vehicle drive device. This invention addresses this need in the art as well as other needs, which will become apparent to those skilled in the art from this disclosure.

It has been discovered that when the drive torque for driving the wheels is obtained from a single electric motor as in the conventional vehicle drive device disclosed in the above mentioned reference, it is necessary for the electric motor to have a large output capacity in order to provide both high torque at low rotational speeds and sufficient torque at medium to high rotational speeds. One feasible method of increasing the output of the electric motor is to increase the number of coil windings and raise the magnetic flux of the motor. However, increasing the number of coil windings causes the size of the electric motor to become large and restricts the degree of layout freedom of the motor with respect to the vehicle.

The present invention was conceived in view of the above problem, and one object of the present invention is to provide a vehicle drive device configured to deliver sufficient drive torque at rotational speeds ranging from low speeds to high speeds while preventing size of a rotary drive source from becoming large.

In order to achieve the aforementioned object, a vehicle drive device is provided that comprises first and second rotary drive sources and a reduction gear. The first and second rotary drive sources are configured and arranged to deliver outputs to a wheel axle. The reduction gear is installed between the wheel axle and the first and second rotary drive sources and configured and arranged such that the outputs of the first and second rotary drive sources can be delivered to the wheel axle with different reduction ratios.

These and other objects, features, aspects and advantages of the present invention will become apparent to those skilled in the art from the following detailed description, which, taken in conjunction with the annexed drawings, discloses preferred embodiments of the present invention.

Referring now to the attached drawings which form a part of this original disclosure:

Figure 1 is a schematic view of a vehicle drive device including two electric motors in accordance with a first embodiment of the present invention;

Figure 2 is a schematic view of a vehicle drive device in accordance with an alternative arrangement of two electric motors in accordance with the first embodiment of the present invention; and

Figure 3 is a schematic view of a vehicle drive device in accordance with a second embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

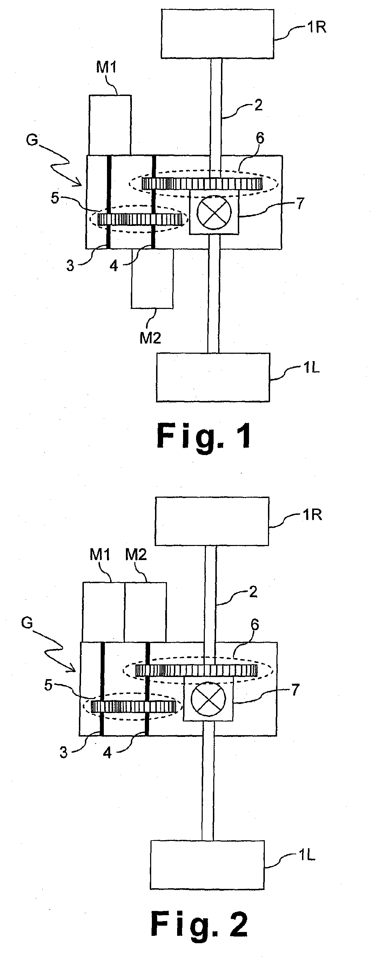

Referring initially to Figure 1, a vehicle drive device is illustrated in accordance with a first embodiment of the present invention. As seen in Figure 1, the vehicle drive device of the first embodiment basically comprises a first electric motor M1, a second electric motor M2, and a reduction gear G. The outputs of the first and second electric motors M1 and M2 are delivered to a wheel shaft 2 through the reduction gear G. The wheel shaft 2 is coupled to a pair of wheels 1L and 1R. Thus, the wheels 1L and 1R are driven by the outputs of the first motor M1 and/or the second motor M2. In the first embodiment, the first and second electric motors M1 and M2 preferably have identical torque characteristics. The first and second electric motors M1 and M2 are conventional components that are well known in the art. Since the first and second electric motors M1 and M2 are well known in the art, the precise structures and configurations of the first and second electric motors M1 and M2 will not be discussed or illustrated in detail herein.

The reduction gear G is preferably a two-stage reduction gear having a first shaft 3 coupled to the first electric motor M1 and an intermediate second shaft 4 coupled to the second electric motor M2. The reduction gear G is configured and arranged such that the rotation of the first shaft 3 (the output of the first electric motor M1) is reduced in two stages (i.e., with two gear trains) before the rotation of the first shaft 3 is transferred to the wheel axle 2.

More specifically, the rotation of the first shaft 3 is preferably reduced by a first gear reduction arrangement including a pair of first reduction gears 5 at a reduction ratio R1 (e.g., R1= 6) and transferred to the second shaft 4 as seen in Figure 1. Then, the rotation of the second shaft 4 is preferably reduced by a second gear reduction arrangement including a pair of second reduction gears 6 at a reduction ratio R2 (e.g., R2 = 6) and transferred to the wheel axle 2. Therefore, the output of the first electric motor M1 is delivered to the wheel axle 2 at a reduction ratio suitable for low speed travel (in this example, R1 × R2 = 36), while the output of the second electric motor M2 is delivered to the wheel axle 2 at a reduction ratio suitable for high speed travel (in this example, R2 = 6). The output side of the second reduction gears 6 is preferably connected to a differential gear 7.

In the first embodiment of the present invention, the arrangement or positioning of the first and second electric motors M1 and M2 is preferably established based on a mass balance of the reduction gear G. More specifically, as seen in Figure 1, the first electric motor M1 is preferably mounted on the right side (side closer to the wheel 1R) of the reduction gear G and the second electric motor M2 is preferably mounted on the left side (side closer to the wheel 1L) of the reduction gear G. In other words, in Figure 1, the first and second electric motors M1 and M2 are arranged in a substantially symmetrical manner with respect to a longitudinal center axis of the reduction gear G that extends substantially perpendicular to the wheel axle 2. Of course it will be apparent to those skilled in the art from this disclosure that the first and second electric motors M1 and M2 can be arranged such that the first and second electric motors M1 and M2 are substantially symmetrical with respect to the transverse center axis of the reduction gear G that extend substantially parallel to the wheel axle 2. In any case, the first and second electric motors M1 and M2 are preferably arranged substantially symmetrically with respect to the center of gravity of the reduction gear G.

In the first embodiment of the present invention, the first electric motor M1 preferably constitutes a first rotary drive source and the second electric motor M2 preferably constitutes a second rotary drive source.

The operation and effects of the vehicle drive device in accordance with the first embodiment will now be described.

When the vehicle is starting to move from a stopped condition or traveling at a low speed, at least the first electric motor M1 is preferably driven to deliver the output to the wheel axle 2. Since the output of the first electric motor M1 is delivered to the wheel axle 2 using a reduction ratio suited to low speed travel, large torques can be obtained at low speeds by driving the first electric motor M1. Thus, a large torque can be imparted on the vehicle as the vehicle starts into motion or travels at a low speed. When the vehicle changes from low speed travel to high speed travel as the vehicle speed increases, at least the second electric motor M2 is preferably driven to deliver the output to the wheel axle 2. As explained above, the vehicle drive device of the first embodiment is arranged such that the second electric motor M2 can deliver sufficient drive torque for stable acceleration at high speeds. Even if the first electric motor M1 is running when the wheel axle 2 is being driven at a high rotational speed, the first electric motor M1 will not contribute much to driving the wheel axle 2 because an electric motor is generally configured such that the drive torque outputted from the electric motor decreases when the rotational speed of the motor becomes high. On the other hand, sufficient amount of the drive torque can be delivered with the second electric motor M2 because the output of the second electric motor M2 is delivered to the wheel axle 2 using a reduction ratio suited to high speed travel. In other words, even if the rotational speed of the first electric motor M1 becomes high when the vehicle speed is relatively high, the rotational speed of the second electric motor M2 does not become as high as the rotational speed of the first electric motor M1, and thus, sufficient torque can be obtained even when the vehicle speed is relatively high.

Accordingly, by delivering the output of the first and second electric motors M1 and M2 to the wheel axle 2 with different reduction ratios (i.e., a reduction ratio suited to low speed travel and a reduction ratio suited to high speed travel), the first and second electric motors M1 and M2 having identical torque characteristics can be used to deliver sufficient drive torque at speeds ranging from low speeds to high speeds. Furthermore, the arrangement of the first and second electric motors M1 and M2 of the first embodiment provides a higher degree of freedom with respect to layout of the vehicle drive device than an arrangement in which one large electric motor is used to obtain drive torque at both low speeds and high speeds.

By arranging the first and second electric motors M1 and M2 to have an identical torque characteristic as explained above, the costs can be reduced due to the use of common parts. Of course, the first and second electric motors M1 and M2 can be arranged to have different torque characteristics. If two electric motors having different torque characteristics are used as the first and second electric motors M1 and M2, a motor having a torque characteristic suitable for low speeds should be used for the first electric motor M1 and a motor having a torque characteristic suitable for high speeds should be used for the second electric motor M2. A motor having a torque characteristic suitable for low speeds is an electric motor whose peak torque value occurs at a low rotational speed. Likewise, a motor having a torque characteristic suitable for high speeds is an electric motor whose peak torque value occurs at a high rotational speed.

Moreover, in the present invention, since the two-stage reduction gear G is installed between the first electric motor M1 and the wheel axle 2, a large reduction ratio that is suitable for low speed travel can be easily obtained. Also, since the reduction gear G is provided with the intermediate second shaft 4 and the second electric motor M2 is coupled to the second shaft 4, there is no need to provide a separate reduction gear for high speed travel. Thus, the size of the reduction gear G can be prevented from being larger.

Additionally, in the first embodiment, an overall mass balance of the first and second electric motors M1 and M2 and the reduction gear G together with respect to the transverse direction of the vehicle can be prevented from excessively deviating from a balanced state because the first electric motor M1 is mounted on the left side (side closer to the wheel 1L) of the reduction gear G and the second electric motor M2 is mounted on the right side (side closer to the wheel 1R) of the reduction gear G in accordance with the mass balance of the reduction gear G. Of course, the present invention is not limited such arrangement or positioning of the first and second electric motors M1 and M2. In the present invention, the first and second electric motors M1 and M2 are preferably positioned with respect to the reduction gear G such that the overall mass balance of the first and second electric motors M1 and M2 and the reduction gears G together is substantially balanced. In other words, if the mass balance of the reduction gear G itself is deviated greatly to, for example, the left of center (i.e., toward the wheel 1L), the first and second electric motors M1 and M2 are preferably mounted on the right side (side closer to the wheel 1R) of the reduction gear G, as shown in Figure 2. Therefore, in such a case, the degree to which the mass balance of the first and second electric motors M1 and M2 and the reduction gear G deviates from a balanced state in the transverse direction of the vehicle can be reduced as the first and second electric motors M1 and M2 counterbalance the deviation of the mass balance of the reduction gear G itself. Of course, in addition to considering the transverse mass balance of the reduction gear G, the longitudinal positions of the first and second electric motors M1 and M2 can be set in consideration of the mass balance of the reduction gear G in the longitudinal direction of the vehicle.

Although an output torque of an electric motor generally decreases at high rotational speeds, the vehicle drive device of the first embodiment enables sufficient drive torque for speeds ranging from low speeds to high speeds to be obtained because the first and second electric motors M1 and M2 are used as the drive sources for driving the vehicle.

The reduction gear G used in the present invention is not limited to a two-stage reduction gear. For example, a three or four-stage reduction gear having a first shaft (corresponding to the first shaft 3) and a plurality of intermediate shafts can be utilized as the reduction gear G of the present invention. In such a case, the second electric motor M2 could be connected to any intermediate shaft downstream of the first shaft.

Although, in the first embodiment of the present invention, an output transmission path from the first electric motor M1 to the wheel axle 2 is merged with an output transmission path from the second electric motor M2 to the wheel axle 2 by using the reduction gear G, the invention is not limited to such an arrangement. The two output transmission paths can be completely separate or configured in any other manner so long as the outputs of the first and second electric motors M1 and M2 can be delivered to the wheel axle 2 using different reduction ratios.

Moreover, the present invention is not limited to using the first and second electric motors M1 and M2 as rotary drive sources. For example, one of or both of the first and second electric motors M1 and M2 can be substituted with a hydraulic motor (or hydraulic motors) to carry out the present invention.

Furthermore, although the vehicle drive device of the first embodiment uses two electric motors (the first and second electric motors M1 and M2), the number of motors is not limited to two. Three or more electric motors may also be used so long as the outputs of at least two of the electric motors can be delivered to the wheel axle 2 with different reduction ratios.

The wheels 1R and 1L in Figure 1 can be any pair of wheels of the vehicle. In other words, the vehicle drive device of the present invention is preferably applied to any vehicle in which at least two wheels (1R and 1L) are configured to be driven by the first and second motors M1 and M2 of the vehicle drive device. For example, the present invention can be applied to four-wheel drive vehicles in which either the front wheels or the rear wheels are driven by the first and second electric motors M1 and M2 of the vehicle drive device of the present invention, and the rear wheels or front wheels (that are not driven by the first and second electric motors M1 and M2) are driven by an engine. Moreover, the present invention can also be applied to two-wheel drive vehicles in which the front wheels or the rear wheels are driven by the first and second electric motors M1 and M2 of the vehicle drive device of the present invention.

Accordingly, with the present invention, since at least the first and second electric motors M1 and M2 are configured to deliver the outputs to the wheel axle 2 with different reduction ratios, sufficient drive torque can be obtained at speeds ranging from low speeds to high speeds. Moreover, the degree of layout freedom of the vehicle drive device can be improved in comparison with a case in which a single large rotary drive source is used to obtain drive torque for speeds ranging from low speeds to high speeds.

### SECOND EMBODIMENT

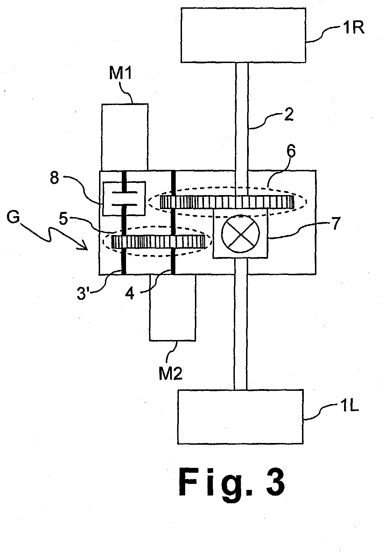

Referring now to Figure 3, a vehicle drive device in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. The parts of the second embodiment that differ from the parts of the first embodiment will be indicated with a single prime (').

The vehicle drive device of the second embodiment is basically identical to the first embodiment except that an electromagnetic clutch 8 or other type of clutch mechanism is installed on a first shaft 3' between the first electric motor M1 and the reduction gear wheel 5, as shown in Figure 3.

The operation and effects of the second embodiment will now be described.

As explained in the first embodiment of the present invention, when the vehicle is starting to move from a stopped condition or traveling at a low speed, at least the first electric motor M1 is preferably operated to deliver the output to the wheel axle 2. At that time, the clutch 8 is engaged so that the output of the first electric motor M1 can be delivered to the wheel axle 2. When the vehicle changes from low speed travel to high speed travel, the second electric motor M2 is preferably started. Then, in the second embodiment of the present invention, the clutch 8 is released while the first electric motor M1 is stopped.

If the first electric motor M1 remained engaged with the first shaft 3', the first electric motor M1 may be rotated in an excessively high speed when the vehicle speed is high because the first electric motor M1 is coupled to the wheel axle 2 with a high reduction ratio suited to low speed travel. Accordingly, in the second embodiment, by disengaging the clutch 8 when the vehicle speed is high, the first electric motor M1 can be prevented from rotating at an excessive speed. Thus, unnecessary wear of the brushes and other components of the first electric motor M1 can be reduced. Also, by disconnecting the first electric motor M during relatively high speed travel, the frictional loss can be held to a small level and degradation of the fuel efficiency can be prevented. Furthermore, in case of using a hydraulic motor instead of the first electric motor M1, cavitations of the hydraulic motor can be prevented by releasing the clutch 8 and disconnecting the motor from the first shaft 3'.

Although the second embodiment has the clutch 8 installed between the first electric motor M1 and the reduction gear wheel 5, the invention is not limited to such arrangement. An additional clutch can be also installed between the second electric motor M2 and the reduction gear 6. In such a case, the frictional loss of the second electric motor M2 can be held to a small level during low speed travel by terminating the drive input to the second electric motor M2 and disconnecting the second electric motor M2 using the additional clutch.

The other constituent features and effects of the second embodiment are substantially the same as those of the first embodiment.

As used herein, the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention.

The terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

This application claims priority to Japanese Patent Application No. 2003-337882. The entire disclosure of Japanese Patent Application No. 2003-337882 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A vehicle drive device, comprising:
first and second rotary drive sources (M1 and M2) configured and arranged to deliver outputs to a wheel axle (2); and
a reduction gear (G) installed between the wheel axle (2) and the first and second rotary drive sources (M1 and M2),configured and arranged such that the outputs of the first and second rotary drive sources (M1 and M2) can be delivered to the wheel axle (2) with different reduction ratios.

2. The vehicle drive device as recited in claim 1, wherein
the reduction gear (G) is a multiple-gear reduction gear (G) having a first shaft (3; 3') coupled to the first rotary drive source (M1) and an intermediate shaft (4) coupled to the second rotary drive source (M2).

3. The vehicle drive device as recited in claim 1 or 2, wherein
the first and second rotary drive sources (M1 and M2) are positioned with respect to the reduction gear (G) in accordance with a mass balance of the reduction gear (G).

4. The vehicle drive device as recited in claim 2 or 3, further comprising
a clutch (8) installed at least one of between the first rotary drive source (M1) and the reduction gear (G) and between the second rotary drive source (M2) and the reduction gear (G).

5. The vehicle drive device as recited in any one of claims 1 to 4, wherein
the first and second rotary drive sources (M1 and M2) are motors.

6. The vehicle drive device as recited in any one of claims 1 to 4, wherein
the first and second rotary drive sources (M1 and M2) are electric motors.

7. The vehicle drive device as recited in any one of claims 1 to 6, wherein
the first and second rotary drive sources (M1 and M2) are positioned such that the first and second rotary drive sources (M1 and M2) are substantially symmetrical with respect to a center of gravity of the reduction gear (G).

8. The vehicle drive device as recited in any one of claims 1 to 8, wherein
the reduction gear (G) further includes a first gear reduction arrangement (5) disposed between the first shaft (3; 3') and the intermediate shaft (4) and a second gear reduction arrangement (6) disposed between the intermediate shaft (4) and the wheel axle (2) such that the output of the first rotary drive source (M1) is transmitted to the wheel axle (2) via the first and second gear reduction arrangement (5 and 6), while the output of the second rotary drive source (M2) is transmitted to the wheel axle (2) via the second gear reduction arrangement (6).

9. The vehicle drive device as recited in claim 8, wherein
the first and second gear reduction arrangements (5 and 6) of the reduction gear (G) are configured and arranged such that the output of the first rotary drive source (M1) is transmitted to the wheel axle (2) with a higher reduction ratio than the output of the second rotary drive source (M2).

10. The vehicle drive device as recited in any one of claims 1 to 9, wherein
the first rotary drive source (M1) is positioned on a first side of the reduction gear (G) with respect to a longitudinal center axis of the reduction gear (G) that is substantially perpendicular to the wheel axle (2), and
the second rotary drive source (M2) is positioned on a second side of the reduction gear (G) that is opposite to the first side with respect to the longitudinal center axis of the reduction gear (G).

11. The vehicle drive device as recited in any one of claims 1 to 9, wherein
the first rotary drive source (M1) and the second rotary drive source (M2) are positioned on a first side of the reduction gear (G) with respect to a longitudinal center axis of the reduction gear (G) that is substantially perpendicular to the wheel axle (2).

12. The vehicle drive device as recited in claim 11, further comprising
a clutch (8) installed between the first rotary drive source (M1) and the reduction gear (G).

13. The vehicle drive device as recited in claim 11, further comprising
a clutch (8) disposed between the first rotary drive source (M1) and the reduction gear (G) to shut off delivering of the output of the first rotary drive source (M1) to the wheel axle (2).

14. The vehicle drive device as recited in any one of claims 1 to 13, wherein
the first and second rotary drive sources (M1 and M2) have substantially identical torque characteristic.
